# EUROPÄISCHE PATENTANMELDUNG

(11) **EP 4 711 309 A1**
(43) Veröffentlichungstag der Anmeldung: **18.03.2026**
(21) Anmeldenummer: 25196622.2
(22) Anmeldetag: 19.08.2025
(51) Int. Cl.: B65G 17/06, A01K 31/16, B65G 19/02, B65G 47/57, B65G 47/84

(54) **EIERFÖRDERER FÜR DIE VERTIKALE FÖRDERUNG UND FÖRDERSYSTEM**

(30) Priorität: 12.09.2024 DE 102024126240
(71) Anmelder: LUBING Maschinenfabrik Ludwig Bening GmbH & Co. KG, 49406 Barnstorf (DE)
(72) Erfinder: JOHANNING, Reiner, 49356 Diepholz (DE); KRUMPE, Stefan, 49406 Barnstorf (DE); ABELN, Michael, 49685 Halen (DE)
(74) Vertreter: Hoener, Matthias

(57) **Zusammenfassung**

Die Erfindung schafft einen Eierförderer, mit dem Eier auf eine sichere Art und Weise auch vertikal förderbar sind. Das wird dadurch erreicht, dass ein Eierförderer (10) für die vertikale Förderung von Eiern (11) zwei entlang einer Förderstrecke verlaufende parallele, beanstandete und endlose Förderketten (20) aufweist, die durch quer zur Förderstrecke verlaufende längliche sowie flächige Mitnehmer (21) zum Mitnehmen der Eier (11) miteinander verbunden sind. Außerdem weist dieser Eierförderer (10) mindestens einen Antrieb (24) auf, der die Förderketten (20) gemeinsam und gleichermaßen umlaufend antreibt. In einem Rahmen (16) des Eierförderers (10) sind mindestens zwei erste Führungen (19) angeordnet, durch welche die Förderketten (20) mit den Mitnehmern (21) von einem horizontalen Eingabebereich (12) über einen vertikalen Förderbereich (14) zu einem horizontalen Ausgabebereich (15) des Rahmens (16) führbar sind.

## Beschreibung

Die Erfindung betrifft einen Eierförderer für die vertikale Förderung gemäß dem Oberbegriff des Anspruchs 1. Außerdem betrifft die Erfindung ein Fördersystem gemäß Anspruch 17.

Der Bedarf an Eiern wird größtenteils durch sogenannte Legeeinheiten bzw. -einrichtungen gedeckt. In diesen Legeanlagen werden Hühner großer Zahl gehalten, um Eier zu legen. Die Größe solcher Legeeinrichtungen steigt unter wirtschaftlichen Gesichtspunkten ständig, womit auch die Anzahl der täglich von den Hühnern gelegten Eier zunimmt. Die Eier müssen von Eierförderern aus den Ställen zu Verarbeitungsstationen transportiert werden, in denen die Eier insbesondere sortiert und verpackt werden.

Mit zunehmender Größe der Legeeinheiten sind Eierförderer erforderlich, die über eine längere Förderstrecke verfügen. Solche Eierförderer sind als Kettenförderer ausgebildet, die über parallele endlose Förderketten verfügen, die durch quer zur Förderstrecke verlaufende stangen- oder rohrartige Tragmittel miteinander verbunden sind. Die Tragmittel folgen so dicht aufeinander, so dass sie ein rostartiges Trum bilden, auf dem die Eier während des Transports längs der Förderstrecke ruhen.

Um dem zunehmenden Platzbedarf der Legeeinheiten zu begegnen, kann es vorgesehen sein, den Transport der Eier auf mehrere Ebenen umzuleiten bzw. zu verteilen. Auch für die verschiedenen Behandlungsschritte der gelegten Eier kann es notwendig sein, dass ein Höhenunterschied überwunden werden muss, um die Eier einer nächsten Bearbeitungsstation zuzuführen. Das Vertikalfördern sowie der Übergang zwischen den konventionellen horizontalen Förderstrecken und einem Vertikalförderer gestaltet sich jedoch als äußerst schwierig, da es das äußerste Ziel ist, die Eier unversehrt zu transportieren.

Der Erfindung liegt ausgehend vom Vorstehenden die Aufgabe zugrunde, einen Eierförderer zu schaffen, mit dem Eier auf eine sichere Art und Weise auch vertikal förderbar sind.

Ein Eierförderer zur Lösung dieser Aufgabe weist die Merkmale des Anspruchs 1 auf. Demnach ist es vorgesehen, dass ein Eierförderer für die vertikale Förderung von Eiern zwei entlang einer Förderstrecke verlaufende parallele, beanstandete und endlose Förderketten aufweist, die durch quer zur Förderstraße verlaufende längliche sowie flächige Mitnehmer zum Mitnehmen der Eier miteinander verbunden sind. Außerdem weist dieser Eierförderer mindestens einen Antrieb auf, der die Förderketten gemeinsam und gleichermaßen umlaufend antreibt. In einem Rahmen des Eierförderers sind mindestens zwei erste Führungen angeordnet, durch welche die Förderketten mit den Mitnehmern von einem horizontalen Eingabebereich über einen vertikalen Förderbereich zu einem horizontalen Ausgabebereich des Rahmens führbar sind. Die zu dem Eingabebereich geförderten Eier werden von den sich umlaufend bewegenden Mitnehmern zunächst horizontal mitgeführt und in einem Übergangsbereich zwischen dem Eingabebereich und dem vertikalen Förderbereich in eine vertikale Bewegung gehoben. Dabei liegen die Eier auf den Mitnehmern und werden so entlang des vertikalen Förderbereichs zum horizontalen Ausgabebereich befördert. Dort wechselt die Förderbewegung von der vertikalen zurück in die horizontale Mitnahme. Je nach Dimensionierung der Mitnehmer lässt sich so ein Ei oder eine Vielzahl von Eiern transportieren und ein Höhenunterschied überwinden. Dieser Höhenunterschied kann sowohl positiv als auch negativ sein. Durch das Mitführen der Eier durch die Mitnehmer kann ein besonders schonender Transport der Eier realisiert werden.

Bevorzugt ist es vorgesehen, dass die Mitnehmer an einer ersten Längskante mit den beiden gegenüberliegenden Randbereichen jeweils an einer der Förderketten befestigt sind und/oder ein Kantenbereich einer zweiten Längskante der Mitnehmer in Förderrichtung gebogen ist, insbesondere eine Lippe aufweist. Durch diese Befestigung der Mitnehmer an den Ketten kann zum einen erreicht werden, dass die Förderketten in den ersten Führungen geführt werden und zum anderen die Förderketten mitsamt den Mitnehmern durch Antriebsrollen umlaufend angetrieben werden. Insbesondere bei der Rückführung der Mitnehmer gestaltet sich dies als schwierig, kann allerdings durch Vorsprünge an den Randbereichen der Mitnehmer realisiert werden. Diese Vorsprünge sind mit den Förderketten fest verbunden und laufen mitsamt den Förderketten in den Führungen. Somit sind die länglichen sowie flächigen Mitnehmer zwischen den Förderketten und somit auch zwischen den Führungen gelagert.

Dadurch, dass der Kantenbereich der zweiten Längskante der Mitnehmer gebogen ist bzw. eine Lippe aufweist, kann beim vertikalen Transport vermieden werden, dass die Eier von den Mitnehmern herabrollen. Diese Lippe kann vorzugsweise aus dem Material des Mitnehmers herausgebogen sein, wodurch sich der Fertigungsprozess vereinfachen und vor allen Dingen kostengünstig gestalten lässt.

Insbesondere sieht es die Erfindung vor, dass die Mitnehmer einen dachförmigen oder dreieckigen Querschnitt aufweisen und jeweils ein Randbereich der ersten Längskanten der beiden gegenüberliegenden Schenkel des Mitnehmers mit aufeinanderfolgenden Kettengliedern der Förderkette verbunden sind. Durch diese bevorzugte Form der Mitnehmer kann die Stabilität der Mitnehmer und vor allen Dingen die Stabilität der Ausrichtung während des vertikalen Förderns verbessert werden.

Ein weiteres vorteilhaftes Ausführungsbeispiel der Erfindung sieht es vor, dass der Rahmen im Eingabebereich und im Ausgabebereich Umlenkmittel aufweist, um die Förderkette mit den Mitnehmern vom Eingabebereich zum Ausgabebereich und zurück zu führen. Bei diesen Umlenkmitteln kann es sich um Rollen, Walzen oder dergleichen handeln. Wie bereits zuvor beschrieben, befinden sich diese Umlenkmittel nur unter den Förderketten, um die Bewegung der Mitnehmer nicht zu beeinflussen.

Ein spezielles Ausführungsbeispiel der Erfindung sieht es vor, dass der vertikale Förderbereich wenigstens bereichsweise, vorzugsweise komplett, senkrecht ausgebildet ist. Es ist jedoch auch ausdrücklich vorgesehen, dass der vertikale Förderbereich nicht 90° zu einer Horizontalen beträgt, sondern in einem Bereich von 45° bis 90°, vorzugsweise 60° bis 80°, liegt. Diese Steigung bzw. diese vertikale Förderung ist nicht beschränkt auf ein Anheben der Eier auf eine höhergelegene Ebene, sondern erstreckt sich vielmehr auch auf ein Absenken der Eier auf eine niedrigere Ebene. Der hier beschriebene Eierförderer lässt nämlich beide Förderrichtungen zu. Für ein Absenken der Eier auf eine niedrigere Ebene wäre lediglich der umgebogene Randbereich bzw. die Lippe der Mitnehmer auf die gegenüberliegende Seite zu verlegen.

Die Erfindung kann es außerdem vorsehen, dass die Mitnehmer einen Abstand von 4 cm bis 5 cm, vorzugsweise 6 cm bis 10 cm, zueinander aufweisen. Gleichermaßen ist es denkbar, dass die Mitnehmer eine Höhe von 4 cm bis 15 cm, vorzugsweise 6 cm bis 10 cm, aufweisen.

Ein besonders bevorzugtes Ausführungsbeispiel der Erfindung sieht es vor, dass wenigstens abschnittsweise, vorzugsweise über die gesamte Länge, zu den Förderketten zwei parallele sowie beabstandete und endlose Transportketten positioniert sind, die entlang der Förderstrecke verlaufen und wobei die Transportketten durch quer zur Förderrichtung verlaufende längliche stangen- oder rohrartige Tragmittel miteinander verbunden sind. Diese Transportketten bzw. Tragmittel dienen dazu, die Eier horizontal über eine längere Strecke zu fördern, und zwar insbesondere zu dem Eingabebereich des vertikalen Förderers und vom Ausgabebereich des vertikalen Förderers weg. Ein besonderer Vorteil kann darin gesehen werden, dass die Transportketten auch über die vertikale Förderstrecke parallel zu den Förderketten verlaufen und somit die horizontale Förderung in die vertikale Förderung und andersherum ansatzlos übergeht. Durch dieses Ineinanderüberführen der verschiedenen Transportabschnitte gestaltet sich der Eierförderer als besonders zuverlässig und schonend für die Eier.

Bevorzugt ist es vorgesehen, dass der Rahmen zwei zweite Führungen für die Transportketten aufweist, wobei die zweiten Führungen über oder oberhalb der ersten Führungen verlaufen. Der Rahmen des Eierförderers nimmt somit Transportketten und die Tragmittel zur horizontalen Förderung auf und führt sie über die gleiche Strecke wie die Förderketten, allerdings leicht versetzt. Dadurch ist es möglich, dass die Eier nicht nur übergangslos an den vertikalen Förderer übergeben werden, sondern auch von diesem wieder übergangslos in die horizontale Bewegung überführt werden können. Dadurch, dass die zweiten Führungen oberhalb der ersten Führungen positioniert sind, wird die umlaufende Bewegung der Führungsketten nicht gestört.

Weiter kann es erfindungsgemäß vorgesehen sein, dass die zweiten Führungen wenigstens im vertikalen Förderbereich parallel zu den ersten Führungen verlaufen. Weiter ist es denkbar, dass sich im Eingabebereich ein Abstand zwischen den zweiten und den ersten Führungen kontinuierlich bis auf einen minimalen Abstand verringert, wobei die ersten Führungen von unten an die zweiten Führungen herangeführt werden, wodurch auch die Förderketten an die Transportketten herangeführt werden. Gleichermaßen kann es vorgesehen sein, dass sich im Ausgabebereich der Abstand zwischen den zweiten und den ersten Führungen kontinuierlich vergrößert, wobei die ersten Führungen von den zweiten Führungen weggeführt werden und wodurch auch die Förderketten von den Transportketten weggeführt werden. Die Förderketten mit den Mitnehmern werden somit im Bereich der vertikalen Förderung an die Transportketten der Transportmittel herangeführt. In diesem Bereich, in dem die beiden verschiedenen Ketten zusammenlaufen, wird der Transport der Eier durch die Transportketten bzw. die Tragmitteln und durch die Förderketten und die Mitnehmer zusammengeführt. Erst durch diese kontinuierliche Zusammenführung ist es möglich, die Eier schonend über eine vertikale Strecke zu befördern.

Ein wesentliches Merkmal der Erfindung kann vorzugsweise darin bestehen, dass die Tragmittel den gleichen Abstand untereinander aufweisen wie die Mitnehmer. Zusätzlich ist es denkbar, dass die Förderketten und die Transportketten sowie die Tragmittel und die Mitnehmer derart relativ zueinander positioniert sind, dass die Mitnehmer im Eingabebereich durch die Tragmittel hindurchgreifen bzw. hindurchführbar sind. Durch das kontinuierliche Heranfahren der Förderketten an die Transportketten greifen die Mitnehmer durch die parallelen Tragmittel durch und schaffen so fächerartige Bereiche, in denen sich die Eier verteilen. Während die Eier zunächst noch durch die Mitnehmer mitgeführt werden, wechselt die Wirkung der Mitnehmer in den vertikalen Bereich in einen hebenden Transport der Eier. Im Ausgabebereich des Eierförderers werden die Mitnehmer wieder kontinuierlich aus den Zwischenräumen zwischen den Tragmitteln herausgeführt und der Transport der Eier durch die Tragmittel fortgesetzt.

Ein wesentlicher Gedanke der Erfindung kann es vorsehen, dass die Förderketten und die Transportketten mit ihren Tragmitteln und den Mitnehmern im Bereich des Eierförderers ineinander übergehen und parallel führbar sind, so dass die Eier kontinuierlich, insbesondere übergangslos, transportierbar sind. In diesem Merkmal ist eines der vielen Vorteile der Erfindung zu sehen, nämlich der übergangslose Transport von der horizontalen Förderung der Eier zu der vertikalen Förderung und gegebenenfalls wieder zurück in die horizontale Förderung. Durch dieses kontinuierliche Fördern können die Eier besonders schonend transportiert werden. Durch das Zusammenführung der Transportketten und der Förderketten werden die Eier nahezu sanft aus einer horizontalen Bewegung in eine vertikale Bewegung gehoben. Gleichermaßen erfolgt eine sanfte Überführung zurück in die horizontale Bewegung. Diese schonende Handhabung der Eier wird dadurch realisiert, dass der vertikale Förderer mit seinen Förderketten nur bereichsweise in die bestehenden Transportketten integriert wird. So kann vermieden werden, dass eine physische Übergabe von einem Transportsystem auf das andere notwendig ist, wie es beispielsweise auch zum Stand der Technik bekannt ist.

Für den beschriebenen Transportprozess kann es vorzugsweise vorgesehen sein, dass ein Abstand zwischen der ersten und der zweiten Führung sowie zwischen den Förderketten und den Transportketten derart ausgelegt ist, dass die Mitnehmer 4 cm bis 15 cm, vorzugsweise 6 cm bis 10 cm, durch die Tragmittel hinausragen. Durch diese Dimensionierung kann es sichergestellt werden, dass die Eier auch während der vertikalen Bewegung sicher befördert werden.

Ein Fördersystem zur Lösung der genannten Aufgabe weist die Merkmale des Anspruchs 17 auf. Demnach ist es vorgesehen, dass das Fördersystem mit einem Eierförderer für die vertikale Förderung gemäß dem Anspruch 1 ausgestattet ist sowie mit einem der Förderer für die horizontale Förderung. Die Kombination dieser beiden Fördersysteme gestaltet sich wie zuvor beschrieben.

Ein bevorzugtes Ausführungsbeispiel der Erfindung wird nachfolgend anhand der Zeichnung näher erläutert. In dieser zeigen:
- Fig. 1: eine perspektivische Darstellung eines Eierförderers,

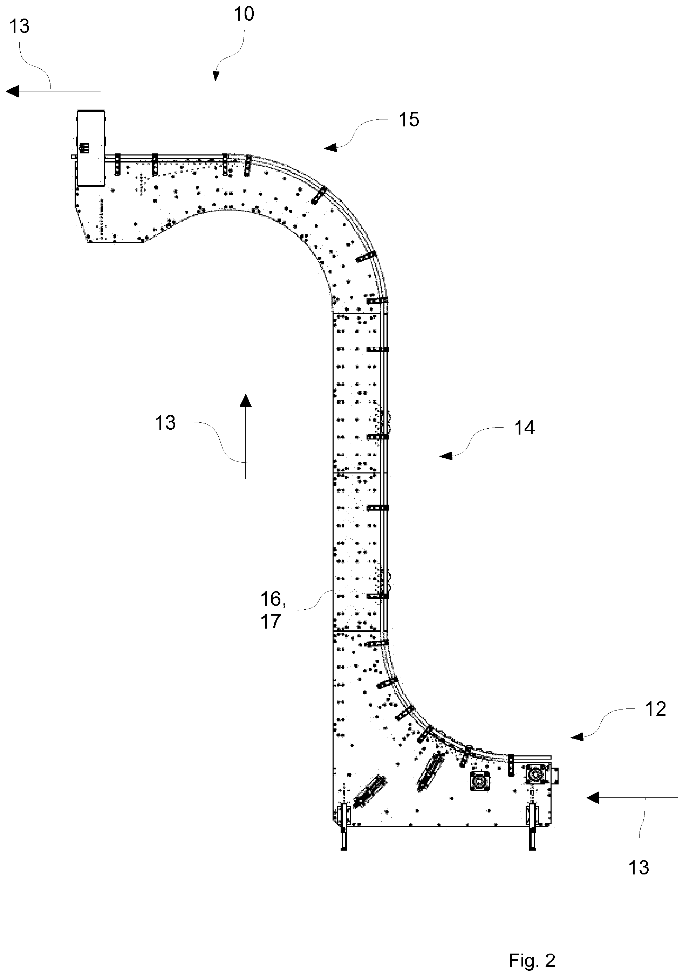

- Fig. 2: eine Seitenansicht des Eierförderers gemäß Fig. 1,
- Fig. 3: eine Schnittdarstellung des Eierförderers gemäß Fig. 2,
- Fig. 4: eine Ausschnittsvergrößerung des Eierförderers gemäß Fig. 3,
- Fig. 5: eine Ausschnittsvergrößerung des Eierförderers gemäß Fig. 3, und
- Fig. 6: eine Ausschnittsvergrößerung des Eierförderers gemäß Fig. 3.

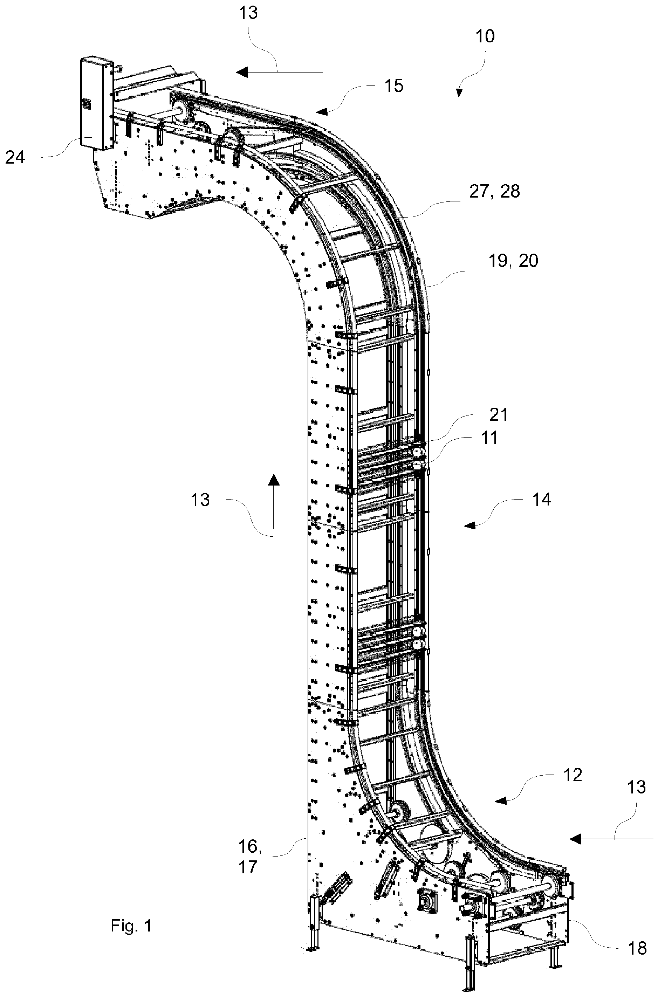

In der Fig. 1 ist ein mögliches Ausführungsbeispiel eines Eierförderers 10 für die vertikale Förderung von Eiern 11 dargestellt. Dieser vertikale Eierförderer 10 ermöglicht es, Eier 11 von einem horizontalen Eingabebereich 12 in Förderrichtung 13 über einen vertikalen Förderbereich 14 zu einem horizontalen Ausgabebereich 15 zu befördern. Bei dem in der Fig. 1 dargestellten Ausführungsbeispiel werden die Eier 11 über den vertikalen Förderbereich 14 und somit auf eine höhere Ebene befördert. Gleichermaßen kann der Eierförderer 10 derart ausgebildet sein, dass die Eier 11 über den vertikalen Förderbereich 14 auf eine niedrigere Ebene befördert werden.

Die Eier 11 werden über einen nicht dargestellten Förderer zum horizontalen Transport von Eiern 11 dem Eingabebereich 12 zugeführt. Am horizontalen Ausgabebereich 15 wird der Transport der Eier 11 mit dem horizontalen Förderer, vorzugsweise übergangslos, zusammengeführt. Der hier beschriebene Eierförderer 10 kann modulhaft als Einheit eingesetzt werden, um die Eier 11 von einer Transportebene auf eine davon beabstandete höhere oder niedrigere Transportebene zu befördern.

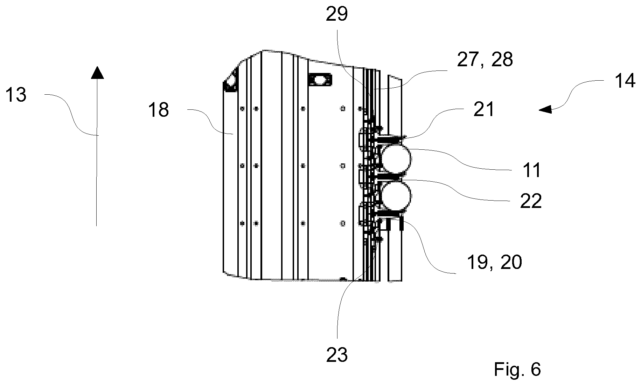

Der Eierförderer 10 besteht im Wesentlichen aus einem Rahmen 16, der sich aus zwei parallelen Rahmenteilen 17 und 18 zusammensetzt. An den Innenwänden weisen diese Rahmenteile 17, 18 jeweils eine erste umlaufende, also in sich geschlossene, Führung 19 auf. Innerhalb diesen ersten Führungen 19 werden jeweils eine endlose Förderkette 20 geführt. Zwischen diesen beiden Förderketten 20, die innerhalb der ersten Führungen 19 der beiden Rahmenteile 17 und 18 angeordnet sind, sind Mitnehmer 21 befestigt. Bei dem in der Fig. 1 dargestellten Ausführungsbeispiel sind die Mitnehmer 21 in einen unregelmäßigen Abstand zueinander zwischen den Förderketten 20 angeordnet. Die Erfindung kann es allerdings vorsehen, dass die Mitnehmer 21 in einem regelmäßigen Abstand von 4 cm bis 15 cm, vorzugsweise 6 cm bis 10 cm, zueinander angeordnet sind und sich somit eine Vielzahl dieser Mitnehmer 21 zwischen den Förderketten 20 erstrecken. Diese Mitnehmer 21 sind dazu ausgebildet, Eier 11 während des Transports entlang der Förderrichtung 13 mitzunehmen. Insbesondere für den vertikalen Transport ist es vorgesehen, dass die Mitnehmer 21 eine nach oben gebogene zweite Längskante 22 aufweisen. Die Ausführungsform ist beispielsweise in der Ausschnittsvergrößerung der Fig. 6 zu erkennen.

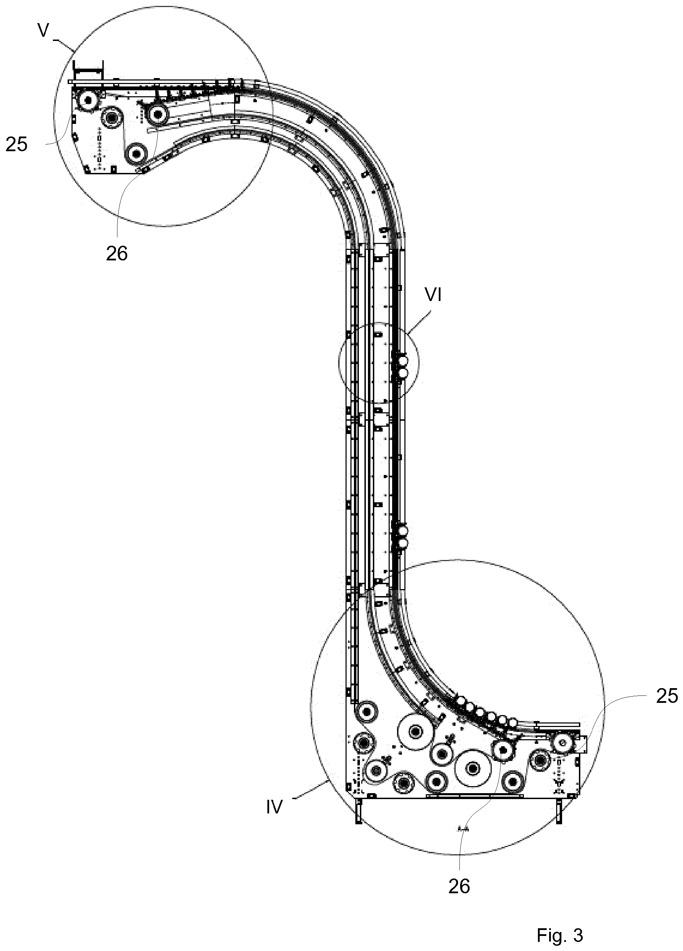

Die Mitnehmer 21 sind mit einer gegenüberliegenden ersten Längskante 23 über Vorsprünge, die sich in die ersten Führungen 19 hereinerstrecken, mit Kettengliedern der beiden Förderketten 20 verbunden. Dadurch ist es möglich, dass sich die Mitnehmer 21 durch die angetriebenen Förderketten 20 in Förderrichtung 13 in einer Endlosbewegung bewegen. Für den umlaufenden Antrieb der Förderketten 20 kann beispielsweise, wie in der Fig. 1 angedeutet, ein Antrieb 24 sorgen, der über entsprechende Antriebswalzen oder -rollen 25 die Förderketten 20 antreibt. Außerdem sind an dem Rahmen 16, insbesondere im Eingabebereich 12 und im Ausgabebereich 15, Umlenkmittel 26 (Fig. 3), die vorzugsweise als Rollen oder Walzen ausgebildet sind, angeordnet, um die Förderketten 20 in Position zu halten. Weiter ist es denkbar, dass durch ein Spannrad 30 am Rahmen 16 die Förderkette 20 und gegebenenfalls über ein Spanndraht 31 die Transportkette 28 bespannt wird. Es kann vorgesehen sein, dass beide Teile 17 und 18 des Rahmens 16 jeweils Spannräder 30, 31 für die Ketten 20, 28 aufweisen oder die Spannräder 30, 31 als durchgehende Walzen für alle Ketten 20, 28 ausgebildet sind.

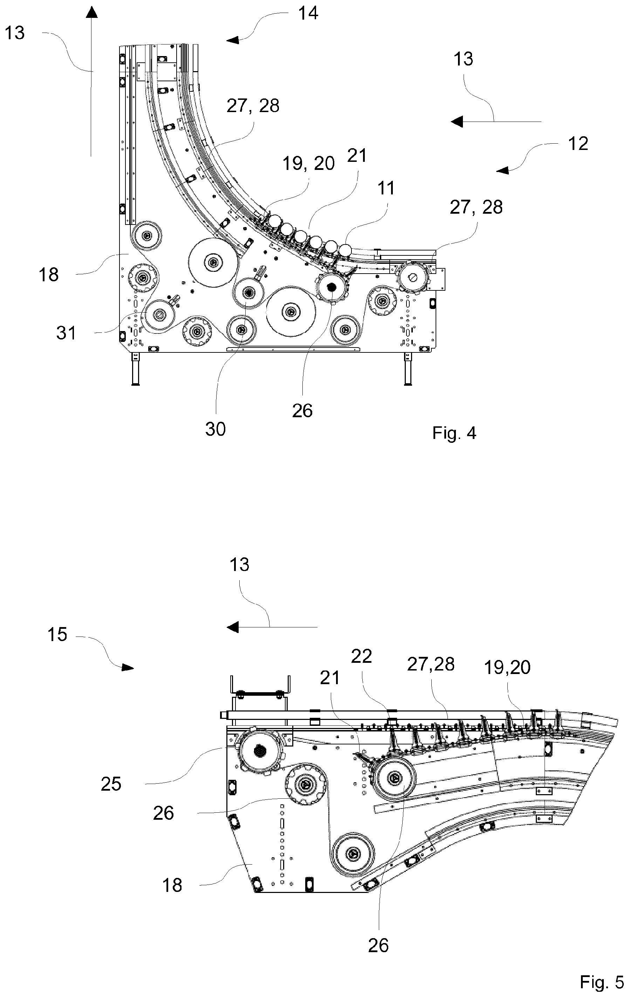

Der Fig. 3, aber insbesondere den Ausschnittsvergrößerungen gemäß den Fig. 4 und 5 ist zu entnehmen, dass neben der Förderkette 20 und der ersten Führung 19 in den Rahmenteilen 17 und 18 noch zwei zweite Führungen 27 zur Aufnahme jeweils einer Transportkette 28 angeordnet sind. Diese Transportketten 28 sind ebenfalls endlos ausgebildet und weisen quer zur Förderrichtung 13 verlaufende längliche stangen- oder rohrartige Tragmittel 29 auf, über welche sie miteinander verbunden sind. Die Tragmittel 29 sind parallel zueinander ausgerichtet und weisen einen Abstand von 5 cm bis 10 cm auf. Der Abstand der Tragmittel 29 ist derart bemessen, dass die Gesamtheit der Tragmittel 29 eine Art Gitter bildet, auf dem sich die Eier 11 transportieren lassen. Diese Transportketten 28 mit den Tragmitteln 29 stellen im Wesentlichen das Transportmittel der Eier 11 für den horizontalen Transport dar.

Die Transportketten 28 mit den Tragmitteln 29 werden im Eingabebereich 12 vom Eierförderer 10 aufgenommen und über die gesamte Länge bis zum Ausgabebereich 15 durch den Eierförderer 10 hindurchgeführt. Dort verlassen die Transportketten 28 mit den Tragmitteln 29 den Eierförderer 10. Den Fig. 4 und 5 ist zu entnehmen, dass im Eingabebereich 12 die Transportketten 28 von den zweiten Führungen 27 aufgenommen werden. Ein wesentliches Merkmal der Erfindung besteht darin, dass die ersten Führungen 19 unterhalb der zweiten Führungen 27 angeordnet ist. Der Fig. 4 ist zu entnehmen, dass der Abstand der erstem Führung 19 bzw. der Förderketten 20 zu der zweiten Führung 27 bzw. den Transportketten 28 stetig abnimmt, bis die Führungen 19, 27 direkt übereinander liegen. Bei diesem sich kontinuierlichen Nähern werden die Mitnehmer 21 durch die Tragmittel 29 hindurchgeführt. Über den gesamten vertikalen Förderbereich 14 verlaufen die Führungen 19 und 27 somit parallel zueinander.

Die Tragmittel 29 sind jeweils zwischen den Mitnehmern 21 angeordnet. Die Mitnehmer 21 fügen sich zwischen die Eier 11, die sich auf den Tragmitteln 29 befinden und nehmen beim Übergang in die vertikale Bewegung Kontakt zu den Eiern 11 auf. Sobald die Bewegung der Mitnehmer 21 eine vertikale Komponente erfährt, werden die Eier 11 durch die Mitnehmer mitgenommen bzw. angehoben (Fig. 6). Auf diese Weise lassen sich pro Mitnehmer 21 einzelne Eier 11 oder mehrere Eier 11 transportieren. Sobald die Mitnehmer 21 den Ausgabebereich 15 erreichen, vergrößert sich der Abstand zwischen den Führungen 19, 27 bzw. zwischen der Förderkette 20 und der Transportkette 28 wieder, sodass sich die Mitnehmer 21 aus den Tragmitteln 29 zurückziehen (Fig. 5). Das Mitnehmen der Eier 11 durch die Mitnehmer 21 endet somit und der horizontale Transport der Eier 11 wird ausschließlich durch die Tragmittel 29 fortgesetzt.

Die Transportketten 28 können während der Führung durch den Eierförderer 10 ebenfalls über einen Antrieb und entsprechende Rollen oder Walzen angetrieben werden oder von den Mitnehmer 21 mitgezogen werden. Dabei nehmen die Mitnehmer 21 wenigstens im vertikalen Förderbereich 14 Kontakt zu den Tragmitteln 29 auf und ziehen bzw. schleppen diese mit. Der Antrieb der Transportketten 28 kann auch in Abhängigkeit von der zu fördernden Last bzw. der Eiermenge variieren oder geregelt werden. Darüber hinaus weisen die Transportketten 28 weitere hier nicht dargestellte Antriebsmittel auf, die sich außerhalb des Eierförderers 10 befinden.

Durch diese Heranführung der Transportketten 28 an den Eierförderer 10 bzw. an die Förderketten 20 und durch das parallele Führen der Ketten 20, 28 gelingt es erfindungsgemäß, die horizontale Förderung der Eier 11 in eine vertikale und zurück in eine horizontale Förderung überzuleiten und zwar ohne dass dabei ein Bruch bzw. eine Unterbrechung in dem Fördersystem entsteht. Durch dieses kontinuierliche Fördern ist es möglich, die Eier besonders zuverlässig und sicher zu transportieren.

### Bezugszeichenliste:

- 10: Eierförderer
- 11: Ei
- 12: Eingabebereich
- 13: Förderrichtung
- 14: Förderbereich
- 15: Ausgabebereich
- 16: Rahmen
- 17: Rahmenteil
- 18: Rahmenteil
- 19: erste Führung
- 20: Förderkette
- 21: Mitnehmer
- 22: zweite Längskante
- 23: erste Längskante
- 24: Antrieb
- 25: Antriebsrolle
- 26: Umlenkmittel
- 27: zweite Führung
- 28: Transportkette
- 29: Tragmittel
- 30: Spannrad
- 31: Spannrad

## Patentansprüche

1. Eierförderer (10) für die vertikale Förderung von Eiern (11) mit zwei entlang einer Förderstrecke verlaufenden parallelen, beabstandeten und endlosen Förderketten (20), die durch quer zur Förderstecke verlaufende längliche sowie flächige Mitnehmer (21) zum Mitnehmen der Eier (11) miteinander verbunden sind und insbesondere mit einem Antrieb (24), der die Förderketten (20) gemeinsam gleichermaßen umlaufend antreibt und einen Rahmen (16), in dem mindestens zwei erste Führungen (19) angeordnet sind, durch welche die Förderketten (20) mit den Mitnehmern (21) von einem horizontalen Eingabebereich (12) über einen vertikalen Förderbereich (14) zu einem horizontalen Ausgabebereich (15) des Rahmens (16) führbar sind.

2. Eierförderer (10) für die vertikale Förderung nach Anspruch 1, **dadurch gekennzeichnet, dass** die Mitnehmer (21) an einer ersten Längskante (23) mit den beiden gegenüberliegenden Randbereichen jeweils an einer der Förderketten (20) befestigt sind und/oder ein Kantenbereich einer zweiten Längskante (22) der Mitnehmer (21) in Förderrichtung (13) gebogen ist, insbesondere eine Lippe aufweist.

3. Eierförderer (10) für die vertikale Förderung nach Anspruch 2, **dadurch gekennzeichnet, dass** die Randbereiche der Mitnehmer (21) Vorsprünge aufweisen, über welche die Mitnehmer (21) mit den Förderketten (20) verbunden sind und mit denen die Förderketten (20) in den ersten Führungen (19) laufen.

4. Eierförderer (10) für die vertikale Förderung nach einem der vorangegangenen Ansprüche, **dadurch gekennzeichnet, dass** die Mitnehmer (21) einen dachförmigen oder dreieckigen Querschnitt aufweisen und jeweils die Randbereiche der ersten Längskanten (23) der beiden gegenüberliegenden Schenkel des Mitnehmers (21) mit aufeinanderfolgenden Kettengliedern der Förderketten (20) verbunden sind.

5. Eierförderer (10) für die vertikale Förderung nach einem der vorangegangenen Ansprüche, **dadurch gekennzeichnet, dass** der Rahmen (16) im Eingabebereich (12) und im Ausgabebereich (15) Umlenkmittel (26) aufweist, um die Förderkette (20) mit den Mitnehmern (21) vom Eingabebereich (12) zum Ausgabebereich (15) und zurück zu führen.

6. Eierförderer (10) für die vertikale Förderung nach einem der vorangegangenen Ansprüche, **dadurch gekennzeichnet, dass** der vertikale Förderbereich (14) wenigstens bereichsweise, vorzugsweise komplett, senkrecht ausgebildet ist.

7. Eierförderer (10) für die vertikale Förderung nach einem der vorangegangenen Ansprüche, **dadurch gekennzeichnet, dass** die Mitnehmer (21) einen Abstand von 4 cm bis 15 cm, vorzugsweise 6 cm bis 10 cm zueinander aufweisen.

8. Eierförderer (10) für die vertikale Förderung nach einem der vorangegangenen Ansprüche, **dadurch gekennzeichnet, dass** wenigstens abschnittsweise, vorzugsweise über die gesamte Länge, zu den Förderketten (20) zwei parallele sowie beabstandete und endlose Transportketten (28), positioniert sind, die entlang der Förderstrecke verlaufen und wobei die Transportketten (28) durch quer zur Förderrichtung (13) verlaufende längliche stangen- oder rohrartige Tragmittel (29) miteinander verbunden sind.

9. Eierförderer (10) für die vertikale Förderung nach Anspruch 8, **dadurch gekennzeichnet, dass** der Rahmen (16) zwei zweite Führungen (27) für die Transportketten (28) aufweist, wobei die zweiten Führungen (27) über oder oberhalb der ersten Führungen (19) verlaufen.

10. Eierförderer (10) für die vertikale Förderung nach Anspruch 9, **dadurch gekennzeichnet, dass** die zweiten Führungen (27) wenigstens im vertikalen Förderbereich (14) parallel zu den ersten Führungen (19) verlaufen.

11. Eierförderer (10) für die vertikale Förderung nach einem der Ansprüche 8 bis 10, **dadurch gekennzeichnet, dass** sich im Eingabebereich (12) ein Abstand zwischen den zweiten und den ersten Führungen (27, 19) kontinuierlich bis auf einen minimalen Abstand verringert, wobei die ersten Führungen (19) von unten an die zweiten Führungen (27) herangeführt werden, wodurch auch die Förderketten (20) an die Transportketten (28) herangeführt werden.

12. Eierförderer (10) für die vertikale Förderung nach einem der Ansprüche 8 bis 11, **dadurch gekennzeichnet, dass** sich im Ausgabebereich (15) der Abstand zwischen den zweiten und den ersten Führungen (27, 19) kontinuierlich vergrößert, wobei die ersten Führungen (19) von den zweiten Führungen (27) weggeführt werden, wodurch auch die Förderketten (20) von den Transportketten (28) weggeführt werden.

13. Eierförderer (10) für die vertikale Förderung nach einem der Ansprüche 8 bis 12, **dadurch gekennzeichnet, dass** die Tragmittel (29) den gleichen Abstand untereinander aufweisen, wie die Mitnehmer (21).

14. Eierförderer (10) für die vertikale Förderung nach einem der Ansprüche 8 bis 13, **dadurch gekennzeichnet, dass** die Förderketten (20) und die Transportketten (28) sowie die Tragmittel (29) und die Mitnehmer (21) derart relativ zueinander positioniert sind, dass die Mitnehmer (21) im Eingabebereich (12) durch die Tragmittel (29) hindurchführbar sind.

15. Eierförderer (10) für die vertikale Förderung nach einem der Ansprüche 8 bis 14, **dadurch gekennzeichnet, dass** die Förderketten (20) und die Transportketten (28) mit ihren Tragmitteln (29) und den Mitnehmern (21) im Bereich des Eierförderers (10) ineinander übergehen und parallel führbar sind, so dass die Eier (11) kontinuierlich, insbesondere übergangslos, transportierbar sind.

16. Eierförderer (10) für die vertikale Förderung nach einem der Ansprüche 8 bis 15, **dadurch gekennzeichnet, dass** ein Abstand zwischen der ersten und der zweiten Führung (19, 27) sowie zwischen den Förderketten (20) und den Transportketten (28) derart ausgelegt ist, dass die Mitnehmer (21) 4 cm bis 15 cm, vorzugsweise 6 cm bis 10 cm, durch die Tragmittel (29) hinausragen.

17. Fördersystem mit einem Eierförderer (10) für die vertikale Förderung Anspruch 1 und einem Eierförderer (10) für die horizontale Förderung.
